# EUROPÄISCHE PATENTANMELDUNG

(11) **EP 2 605 221 A1**
(43) Veröffentlichungstag der Anmeldung: **19.06.2013**
(21) Anmeldenummer: 12196940.6
(22) Anmeldetag: 13.12.2012
(51) Int. Cl.: G07F 7/06, B65G 47/24, B65G 13/02

(54) **Vorrichtung zur Handhabung von Behältern mit einer Rolleinrichtung**

(30) Priorität: 16.12.2011 DE 102011056532
(71) Anmelder: Wincor Nixdorf International GmbH, 33106 Paderborn (DE)
(72) Erfinder: Hartmann, Udo, 82152 Planegg (DE)

(57) **Zusammenfassung**

Die Erfindung betrifft eine Vorrichtung (34) zur Handhabung von Behältern (36) mit einer Fördervorrichtung zum Transport eines Behälters (36) in eine Transportrichtung (T) mit einer Rolleinrichtung (26), welche mindestens ein entlang der Transportrichtung (T) angeordnetes Rollelement (10) aufweist, wobei die Transportrichtung (T) parallel zu einer Längsachse des Behälters (36) verläuft, wobei das mindestens eine Rollelement (10) so ausgeführt ist, dass es in einer Förderanordnung zum Transportieren des Behälters (36) in die Transportrichtung (T) aufgrund einer Drehung um eine eigene Achse auf den Behälter (36) eine in die Transportrichtung (T) wirkende Kraft ausübt, so dass der Behälter (36) in die Transportrichtung (T) befördert wird, und dass es in einer Identifizierungsanordnung zum Identifizieren des Behälters (36) durch Rotation des Behälters (36) um die Längsachse aufgrund einer Drehung um die eigene Achse oder um eine weitere eigene Achse auf den Behälter (36) eine tangential an einer Oberfläche des Behälters (36) wirkende Kraft ausübt, so dass der Behälter (36) um die Längsachse rotiert wird.

## Beschreibung

Die Erfindung betrifft eine Vorrichtung zur Handhabung von Behältern mit einer Fördervorrichtung zum Transport eines Behälters in eine Transportrichtung. Solche Vorrichtungen werden insbesondere in Rücknahmeautomaten für Behälter, wie z.B. Leergut, verwendet.

Aus der DE 100 55 208 ist eine Einheit für Behälter-Rücknahmeautomaten bekannt, die aus zwei endlosen Förderbändern besteht, die V-förmig angeordnet sind, so dass beispielsweise eine Flasche oder eine Dose auf diesen Förderbändern in Richtung ihrer Längsachse transportiert werden kann. Unterhalb der Förderbänder sind zwei Walzen angeordnet, die durch einen Drehantrieb antreibbar sind. Die Förderbänder können verschwenkt werden, so dass der Behälter auf die Walzen fällt und von diesen gedreht wird. Dabei erkennt ein oberhalb der Fördereinheit angebrachter Detektor einen Identifikationscode wie einen Barcode auf dem Behälter. Nach der Erkennung des Barcodes werden die Förderbänder wiederum verschwenkt, wobei der auf den Walzen gelagerte Behälter wieder angehoben und von den Förderbändern weitergeleitet wird.

Aus der EP 1 167 247 B1 ist eine Einrichtung bekannt, bei der die Transportbänder für die Translationsbewegung in die Walzen für die Rotationsbewegung des Behälters integriert ist, so dass während der Rotationsbewegung der Walzen die Förderbänder mitbewegt werden.

Des Weiteren ist aus der DE 201 12 651 U1 eine Vorrichtung zur Handhabung von Flüssigkeiten bekannt, die aus zwei V-förmig angeordneten Förderbändern besteht, auf denen beispielsweise eine Flasche oder eine Dose in Richtung ihrer Längsachse transportiert werden kann. Unterhalb der Förderbänder sind zwei Walzen angeordnet, die durch einen Drehantrieb antreibbar sind. Die Förderbänder können verschwenkt werden, so dass der Behälter auf die Walzen fällt und von diesen gedreht wird. Dabei erkennt ein oberhalb der Fördereinheit angebrachter Detektor einen Identifikationscode wie einen Barcode auf dem Behälter. Nach der Erkennung des Barcodes werden die Förderbänder wiederum verschwenkt, wobei der auf den Walzen gelagerte Behälter wieder angehoben und von den Förderbändern weitergeleitet wird.

Aus der DE 697 15 876 T2 ist eine Vorrichtung bekannt, bei der ein V-förmiger Förderer Flüssigkeitsbehälter liegend transportiert. Mit Hilfe einer Detektoreinheit werden charakteristische Merkmale des Behälters, wie z.B. die Kontur oder ein Identifikationscode erfasst. Oberhalb des Förderers sind Rotationswalzen mit ortsbeweglichen Drehlagern angeordnet, die unter Abstandsveränderung seitlich aufeinander zu und voneinander weg bewegbar sind. Bei der Bewegung mit Abstandsverringerung wird ein Behälter vom Förderer hochgehoben und gedreht, so dass ein Identifikationscode von der Detektoreinheit gelesen werden kann. Werden die Rotationswalzen auseinander bewegt, so fallen sie auf den V-förmigen Förderer herab und können von dort in Richtung der Längsachse der Behälter weiter transportiert werden.

Die Druckschrift DE 103 58 203 A1 offenbart eine Einheit für Behälter-Rücknahmeautomaten mit einer Fördervorrichtung zum liegenden Transport der Behälter in Richtung ihrer Längsachse und zum Drehen der Behälter um ihre Längsachse, bei der die Fördervorrichtung aus einer oder mehreren nebeneinander angeordneten, umlaufenden Förderketten mit Tragelementen und darauf angeordneten Fördergliedern besteht, wobei die Förderglieder um eine sich in Förderlängsrichtung erstreckende Achse in Drehbewegung versetzbar sind.

Bei den bekannten Förder- und Dreheinheiten für Behälter wie Flaschen oder Dosen ist jedoch der Aufbau aufwendig und kompliziert.

Aufgabe der vorliegenden Erfindung ist es daher, Vorrichtung zur Handhabung von Behältern bereitzustellen, die sich durch einen einfacheren mechanischen Aufbau auszeichnet und insgesamt kostengünstiger zu fertigen ist.

Diese Aufgabe wird durch eine Vorrichtung mit den Merkmalen des Anspruchs 1 gelöst. Vorteilhafte Weiterbildungen der Erfindung sind in den abhängigen Ansprüchen angegeben.

Erfindungsgemäß umfasst die Vorrichtung zur Handhabung von Behältern eine Fördervorrichtung zum Transport eines Behälters in eine Transportrichtung. Die Fördervorrichtung hat eine Rolleinrichtung, welche mindestens ein entlang der Transportrichtung angeordnetes Rollelement aufweist, wobei die Transportrichtung parallel zu einer Längsachse des Behälters verläuft, und wobei das mindestens eine Rollelement so ausgeführt ist, dass es in einer Förderanordnung zum Transportieren des Behälters in die Transportrichtung aufgrund einer Drehung um eine eigene Achse auf den Behälter eine in die Transportrichtung wirkende Kraft ausübt, so dass der Behälter in die Transportrichtung befördert wird, und dass es in einer Identifizierungsanordnung zum Identifizieren des Behälters durch Rotation des Behälters um die Längsachse aufgrund einer Drehung um die eigene Achse oder um eine weitere eigene Achse auf den Behälter eine tangential an einer Oberfläche des Behälters wirkende Kraft ausübt, so dass der Behälter um die Längsachse rotiert wird.

Bevorzugt versteht man unter dem Ausdruck tangential zur Oberfläche des Behälters eine Richtung, die senkrecht zur Transportrichtung und somit auch senkrecht zur Längsachse des Behälters steht.

Ferner wird hierbei unter Behältern insbesondere pfandpflichtige Getränkeverpackungen, wie z.B. Mehrwegflaschen oder Getränkedosen, jedoch auch Behälter, insbesondere Glasbehälter, für Lebensmittel wie z.B. Joghurt verstanden.

Hierbei wird durch ein einzelnes Rollelement erreicht, dass ein zu transportierender Behälter sowohl in die Transportrichtung befördert werden kann als auch um die Längsachse rotiert werden kann. Unter einem Rollelement wird hierbei ein Bauteil verstanden, welches durch eine Abrollbewegung, welche bevorzugt angetrieben erfolgt, auf dem zu transportierenden Behälter auf diesen unterschiedliche Kräfte ausüben kann. Durch diese Kräfte kann der Behälter zum einen in die Transportrichtung befördert werden oder um die Längsachse rotiert werden.

Mögliche Rollelemente sind hierbei Rollen bzw. Räder, die so gedreht beziehungsweise ausgerichtet werden können, dass aufgrund einer Drehung der Rollen bzw. Räder eine Oberfläche der Rollen bzw. Räder auf die Oberfläche des zu transportierenden Behälters entweder eine Kraft in Transportrichtung oder eine tangential an der Oberfläche des Behälters wirkende Kraft ausgeübt werden kann, so dass der Behälter im ersten Fall in die Transportrichtung befördert wird oder im zweiten Fall um die Längsachse gedreht wird.

Ferner ist als Rollelement auch eine Kugel vorstellbar. Hierbei kann die Kugel nach einer Ausführungsform um unterschiedliche Achsen rotiert werden, insbesondere um senkrecht zueinander stehende Achsen, so dass bei einer Rotation um die erste Achse der Behälter in die Transportrichtung befördert wird und bei einer Rotation um die zweite Achse der Behälter um die Längsachse rotiert wird. Nach einer weiteren Ausführungsform erfolgt der Antrieb durch die Kugel analog zum oben genannten Fall der Rollen jeweils durch dieselbe Kugelachse, wobei für die unterschiedlichen Antriebsarten entlang der Transportrichtung und tangential zur Behälteroberfläche die Kugel so gedreht wird, dass durch eine Drehung der Kugel um dieselbe Kugelachse die jeweiligen unterschiedlichen Kräfte ausgeübt werden können.

Die Erfindung basiert demnach auf der Erkenntnis, dass durch ein einziges Rollelement unterschiedliche Kräfte auf einen zu transportierenden Behälter ausgeübt werden können, so dass dieser entweder in die Transportrichtung transportiert wird oder um die Längsachse rotiert wird. Hierdurch wird unter anderem erreicht, dass in Rücknahmeautomaten für Behälter der üblicherweise zu bewerkstelligende Transport in die Transportrichtung und die Rotation um die Längsachse zum Erkennen des Behälters mit nur einem einzigen, einfach herzustellenden Element erzielbar ist.

Durch Umkehrung der Drehbewegung des Rollelements ist es möglich, den Behälter auch entgegen der Transportrichtung zu befördern. Ferner ist es möglich, den Behälter um seine Längsachse in eine Drehrichtung oder in die entgegengesetzte Drehrichtung rotieren zu lassen.

Durch ein einziges Rollelement kann der Behälter nur so lange befördert werden, wie der Behälter und das Rollelement in Kontakt sind. Soll der Behälter über eine weitere Strecke transportiert werden, so benötigt man zumindest zwei Rollelemente, die so angeordnet sind, dass spätestens dann, wenn das erste Rollelement den Behälter nicht mehr kontaktiert, das zweite Rollelement den Behälter kontaktiert, um ihn weiter anzutreiben.

Nach einer Ausführungsform sind die Rollelemente unterhalb des Behälters angeordnet, wobei eine Führvorrichtung vorgesehen ist, welche den Behälter entlang der Transportrichtung führt und ein seitliches Ausbrechen verhindert. Eine solche Führvorrichtung kann zum Beispiel aus zwei seitlichen Leisten mit nicht angetriebenen Rollen bestehen. Nach einer weiteren Ausführungsform kann der Behälter in einer V-förmigen Mulde geführt werden, wobei auf einer Seite der Mulde angetriebene Rollelemente angeordnet sind und auf der anderen Seite nicht angetriebene Rollen angebracht sind.

Erfindungsgemäß können die Rollelemente mit oder ohne eigenen Antrieb ausgestattet sein. Hierbei ist jedoch klar, dass für einen Transport in die Transportrichtung oder eine Drehung des Behälters um die Längsachse angetriebene Rollelemente benötigt werden. Für den Transport in die Transportrichtung sind zu jedem Zeitpunkt mindestens zwei angetriebene Rollelemente mit dem Behälter in Kontakt.

Bevorzugt übt das mindestens eine Rollelement in einer Kombinationsanordnung aufgrund einer Drehung um die eigene Achse oder um eine zusätzliche eigene Achse auf den Behälter eine sowohl tangential an der Oberfläche des Behälters wirkende als auch in die Transportrichtung wirkende Kraft aus, so dass der Behälter in die Transportrichtung befördert wird und gleichzeitig um die Längsachse rotiert wird. Hierdurch wird vorteilhafterweise erreicht, dass das Rollelement die vorstehend beschriebenen Kräfte entlang der Transportrichtung bzw. tangential zur Oberfläche des Behälters gleichzeitig auf den zu transportierenden Behälter ausübt. Hierdurch wird erreicht, dass der Behälter, während er in die Transportrichtung befördert wird, gleichzeitig um die Längsachse rotiert. Somit kann durch Umschalten des Rollelements zwischen der Förderanordnung, der Identifizierungsanordnung und der Kombinationsanordnung die Bewegung des Behälters zwischen einem Befördern in die Transportrichtung, einem Rotieren um die Längsachse und einer kombinierten Bewegung des Behälters, bei der der Behälter sowohl in die Transportrichtung befördert wird als auch gleichzeitig um die Längsachse rotiert, umgeschaltet werden.

Bevorzugt gibt es mehrere Kombinationsanordnungen. Hierbei lässt sich das Verhältnis der Transportgeschwindigkeit entlang der Transportrichtung zur Rotationsgeschwindigkeit um die Längsachse beliebig wählen. Wie bereits vorstehend erwähnt, wird durch Umkehr der Drehrichtung der Rollelemente sowohl die Bewegung des Behälters entlang der Transportrichtung als auch die Rotationsrichtung des Behälters umgekehrt.

Bei der vorliegenden Definition des Ausrichtungswinkels sind beide Rotationsrichtung des Behälters um die Längsachse möglich. Dies liegt daran, dass eine Spiegelung einer Lagerachse eines Rades an der Achse der Transportrichtung den Ausrichtungswinkel unverändert lässt, wohingegen sich die Drehrichtung des Behälters einer solchen Spiegelung eines Rollelements oder eines Rades umkehrt. Da die Achsen der Räder in einer Ebene liegen, existieren zu einem Ausrichtungswinkel zwei Einstellungen der Lagerachse der Räder. Der jeweils andere Ausrichtungswinkel wird vorliegend als der gespiegelte Ausrichtungswinkel bezeichnet.

Bei einer Umkehr der Drehrichtung der Räder und gleichzeitiger Einstellung der Ausrichtungswinkel der Räder auf den gespiegelten Ausrichtungswinkel wird somit nach einer bevorzugten Ausführungsform erreicht, dass die Drehrichtung des Behälters erhalten bleibt, jedoch seine Bewegung entlang der Transportrichtung umgekehrt wird.

Bevorzugt weist das mindestens eine Rollelement ein um eine Lagerachse drehbares Rad auf. Dies hat den Vorteil, dass das Rollelement durch ein einfaches Bauteil realisiert wird. Durch geeignete Drehung der Rollfläche des Rades gegenüber der Oberfläche des Behälters werden die unterschiedlichen Anordnungen wie Förderanordnung, Identifizierungsanordnung und Kombinationsanordnung erreicht.

Bevorzugt weist das mindestens eine Rollelement ein die Lagerachse des Rades lagerndes Profil, insbesondere ein U-Profil, auf, welches ein an dem Profil drehbar gelagertes Befestigungsmittel hat. Hierbei ist das Befestigungsmittel bevorzugt um eine Achse drehbar, welche senkrecht zur Lagerachse des Rades verläuft. Noch bevorzugter schneidet die Drehachse des Befestigungsmittels die Lagerachse des Rades senkrecht. Hierbei steht die Drehachse des Befestigungsmittels bevorzugt senkrecht zur Transportrichtung. In letzterem Fall kann durch Drehung des Profils um die Drehachse des Befestigungsmittels das Rad bzw. die Lagerachse des Rades relativ zur Transportrichtung ausgerichtet werden. Falls die Lagerachse des Rades und die Transportrichtung einen Winkel von 0° bilden, stehen die Räder senkrecht zur Transportrichtung, so dass ein angetriebenes Rad den Behälter um seine Längsachse dreht. Falls die Lagerachse des Rades und die Transportrichtung einen Winkel von 90° bilden, stehen die Räder parallel zur Transportrichtung, so dass ein angetriebenes Rad den Behälter in die Transportrichtung befördert. Falls die Lagerachse des Rades und die Transportrichtung einen Winkel zwischen 0° und 90° bilden, üben die Räder auf den Behälter sowohl eine Kraft in die Transportrichtung als auch tangential zur Oberfläche des Behälters aus, so dass der Behälter eine Bewegung in die Transportrichtung als auch um die Längsachse ausführt. Bevorzugt kann die Lagerachse jedes Rades um einen Winkel von mindestens 90° oder genau um 90° gedreht werden. In letzterem Fall kann für jedes Rad erreicht werden, dass die Lagerachse mit der Transportrichtung einmal einen Winkel von 90° und ein anderes Mal einen Winkel von 0° bildet. In diesem Fall dreht sich der Behälter immer in dieselbe Drehrichtung, außer für den Fall, wenn der Winkel genau 90° beträgt.

Nach einer anderen Ausführungsform kann die Lagerachse jedes Rades um einen Winkel von 180° gedreht werden, so dass für jedes Rad erreicht werden kann, dass die Lagerachse mit der Transportrichtung Winkel von 0°, 90° und -90° bilden kann. In diesem Fall kann der Behälter die Transportrichtung transportiert werden, während er eine beliebige Drehbewegung ausführt.

Bevorzugt weist die Rolleinrichtung eine Mehrzahl von in einer Ebene und entlang der Transportrichtung angeordneten Rollelementen auf, wobei die Lagerachsen der Räder parallel zu der Ebene sind, wobei die Lagerachsen der Räder der Rolleinrichtung parallel zueinander sind und in einer einzigen Ebene verlaufen, wobei die Lagerachsen der Räder der Rolleinrichtung in der Ebene mit der Transportrichtung einen Ausrichtungswinkel bilden, wobei der Ausrichtungswinkel derjenige Winkel ist, welcher kleiner als oder gleich 90° ist, wobei der Fall, in dem der Ausrichtungswinkel 90° beträgt, der Förderanordnung, der Fall, in dem der Ausrichtungswinkel 0° beträgt, der Identifizierungsanordnung entspricht, und der Fall, in dem der Ausrichtungswinkel zwischen 0° und 90° liegt, der Kombinationsanordnung entspricht, und wobei die Rolleinrichtung so angeordnet ist, dass mindestens eines der Räder der Rolleinrichtung in der Förderanordnung aufgrund einer Drehung mindestens eines der Räder der Rolleinrichtung auf den Behälter eine in die Transportrichtung wirkende Kraft ausübt, so dass der Behälter in die Transportrichtung befördert wird, in der Identifizierungsanordnung aufgrund einer Drehung mindestens eines der Räder der Rolleinrichtung auf den Behälter eine tangential an einer Oberfläche des Behälters wirkende Kraft ausübt, so dass der Behälter um die Längsachse rotiert wird, und in der Kombinationsanordnung aufgrund einer Drehung mindestens eines der Räder der Rolleinrichtung auf den Behälter eine sowohl tangential an der Oberfläche des Behälters wirkende als auch in die Transportrichtung wirkende Kraft ausübt, so dass der Behälter in die Transportrichtung befördert wird und gleichzeitig um die Längsachse rotiert wird.

Bevorzugt sind die Rollelemente jeweils identisch. Die Anordnung der Rollelemente in einer Ebene ist so zu verstehen, dass die Lagerachsen der Räder der Rollelemente in einer Ebene angeordnet sind. Ferner ist es bevorzugt, dass die Rollelemente mit dem oben genannten Befestigungsmittel an einer zur vorstehend genannten Ebene parallel Ebene befestigt sind. Nach einer Ausführungsform ist bei einer solchen Rolleinrichtung mindestens ein Rollelement angetrieben. Nach einer weiteren Ausführungsform sind alle Rollelemente angetrieben.

Durch eine solche Rolleinrichtung kann ein Behälter entlang der Rollelemente der Rolleinrichtung transportiert werden, wobei er gleichzeitig um die Längsachse rotieren kann. Ebenso ist eine reine Rotation um die Längsachse möglich.

Bevorzugt ist eine weitere Rolleinrichtung vorgesehen, welche eine Mehrzahl von in einer weiteren Ebene und entlang der Transportrichtung angeordneten Rollelementen aufweist, wobei die Lagerachsen der Räder der weiteren Rolleinrichtung parallel zu der weiteren Ebene sind, wobei die Lagerachsen der Räder der weiteren Rolleinrichtung parallel zueinander sind und in einer einzigen Ebene verlaufen,
wobei die Lagerachsen der Räder der weiteren Rolleinrichtung in der weiteren Ebene mit der Transportrichtung einen weiteren Ausrichtungswinkel bilden, wobei der weitere Ausrichtungswinkel derjenige Winkel ist, welcher kleiner als oder gleich 90° ist, wobei der Fall, in dem der weitere Ausrichtungswinkel 90° beträgt, der Förderanordnung, der Fall, in dem der Ausrichtungswinkel 0° beträgt, der Identifizierungsanordnung entspricht, und der Fall, in dem der Ausrichtungswinkel zwischen 0° und 90° liegt, der Kombinationsanordnung entspricht, und wobei der Ausrichtungswinkel und der weitere Ausrichtungswinkel gleich sind, und wobei die Ebene der Rolleinrichtung und die weitere Ebene der weiteren Rolleinrichtung so zueinander angeordnet sind und ein Abstand der Rolleinrichtung zur weiteren Rolleinrichtung so gewählt ist, dass mindestens eines der Räder der Rolleinrichtung und/oder der weiteren Rolleinrichtung in der Förderanordnung aufgrund einer Drehung mindestens eines der Räder der Rolleinrichtung und/oder der weiteren Rolleinrichtung auf den Behälter eine in die Transportrichtung wirkende Kraft ausübt, so dass der Behälter in die Transportrichtung befördert wird, in der Identifizierungsanordnung aufgrund einer Drehung mindestens eines der Räder der Rolleinrichtung und/oder der weiteren Rolleinrichtung auf den Behälter eine tangential an einer Oberfläche des Behälters wirkende Kraft ausübt, so dass der Behälter um die Längsachse rotiert wird, und in der Kombinationsanordnung aufgrund einer Drehung mindestens eines der Räder der Rolleinrichtung und/oder der weiteren Rolleinrichtung auf den Behälter eine sowohl tangential an der Oberfläche des Behälters wirkende als auch in die Transportrichtung wirkende Kraft ausübt, so dass der Behälter in die Transportrichtung befördert wird und gleichzeitig um die Längsachse rotiert wird.

Durch das Anbringen einer vorzugsweise identischen weiteren Rolleinrichtung kann erreicht werden, dass der Behälter durch die beiden Rolleinrichtungen entlang der Transportrichtung geführt werden kann, ohne dass es einer weiteren Führvorrichtung bedarf. Bei einem horizontal zu transportierenden Behälter kann dies beispielsweise dadurch erreicht werden, dass die beiden Rolleinrichtungen unterhalb des Behälters so angeordnet sind, dass die Ebene und die weitere Ebene sich V-förmig schneiden. Ferner ist es möglich, dass der Behälter nicht horizontal, sondern unter einem bestimmten Winkel zur Horizontalen befördert wird. Zur Erzielung eines großen Winkels zur Horizontalen werden bevorzugt Materialien für die Räder benutzt, welche eine große Haftreibung gegenüber den verwendeten Materialien der Behälter aufweisen.

Nach einer anderen Ausführungsform sind die Anordnungswinkel der beiden Rolleinrichtungen unterschiedlich. Beispielsweise kann ein Anordnungswinkel 0° und der andere Anordnungswinkel 90° betragen. In diesem Fall kann die eine Rolleinrichtung dazu benutzt werden den Behälter in die Transportrichtung zu transportieren, während die andere Rolleinrichtung dazu benutzt wird, den Behälter um die Längsachse zu rotieren.

Bevorzugt ist eine zusätzliche Rolleinrichtung vorgesehen, welche eine Mehrzahl von in einer zusätzlichen Ebene und entlang der Transportrichtung angeordneten Rollelementen aufweist, wobei die Lagerachsen der Räder der zusätzlichen Rolleinrichtung parallel zu der zusätzlichen Ebene sind, wobei die Lagerachsen der Räder der zusätzlichen Rolleinrichtung parallel zueinander sind und in einer einzigen Ebene verlaufen, wobei die Lagerachsen der Räder der zusätzlichen Rolleinrichtung in der zusätzlichen Ebene mit der Transportrichtung einen zusätzlichen Ausrichtungswinkel bilden, wobei der zusätzliche Ausrichtungswinkel derjenige Winkel ist, welcher kleiner als oder gleich 90° ist, wobei der Fall, in dem der Ausrichtungswinkel 90° beträgt, der Förderanordnung, der Fall, in dem der Ausrichtungswinkel 0° beträgt, der Identifizierungsanordnung entspricht, und der Fall, in dem der Ausrichtungswinkel zwischen 0° und 90° liegt, der Kombinationsanordnung entspricht, und wobei der Ausrichtungswinkel, der weitere Ausrichtungswinkel und der zusätzliche Ausrichtungswinkel gleich sind, und wobei die Ebene, die weitere Ebene und die zusätzliche Ebene so zueinander angeordnet sind und die Rolleinrichtung, die weitere Rolleinrichtung und die zusätzliche Rolleinrichtung räumlich so angeordnet sind, dass mindestens eines der Räder der Rolleinrichtung, der weiteren Rolleinrichtung und/oder der zusätzlichen Rolleinrichtung in der Förderanordnung aufgrund einer Drehung mindestens eines der Räder der Rolleinrichtung, der weiteren Rolleinrichtung und/oder der zusätzlichen Rolleinrichtung auf den Behälter eine in die Transportrichtung wirkende Kraft ausübt, so dass der Behälter in die Transportrichtung befördert wird, in der Identifizierungsanordnung aufgrund einer Drehung mindestens eines der Räder der Rolleinrichtung, der weiteren Rolleinrichtung und/oder der zusätzlichen Rolleinrichtung auf den Behälter eine tangential an einer Oberfläche des Behälters wirkende Kraft ausübt, so dass der Behälter um die Längsachse rotiert wird, und in der Kombinationsanordnung aufgrund einer Drehung mindestens eines der Räder der Rolleinrichtung, der weiteren Rolleinrichtung und/oder der zusätzlichen Rolleinrichtung auf den Behälter eine sowohl tangential an der Oberfläche des Behälters wirkende als auch in die Transportrichtung wirkende Kraft ausübt, so dass der Behälter in die Transportrichtung befördert wird und gleichzeitig um die Längsachse rotiert wird.

Durch das Anbringen von drei vorzugsweise identischen Rolleinrichtungen kann ebenso wie im Fall mit zwei Rolleinrichtungen erreicht werden, dass der Behälter durch die Rolleinrichtungen entlang der Transportrichtung geführt werden kann, ohne dass es einer weiteren Führvorrichtung bedarf. Der Vorteil gegenüber nur zwei Rolleinrichtungen besteht darin, dass der Behälter hierbei auch vertikal transportierbar ist. Dazu ist es nötig, dass der Behälter mit den drei Rolleinrichtungen kraftschlüssig verbunden ist. Dies kann zum Beispiel dadurch erreicht werden, dass der Behälter zwischen den drei Rolleinrichtungen eingeklemmt wird. Bevorzugt wird die räumliche Anordnung der Rolleinrichtungen an unterschiedliche Größen von Behältern angepasst.

Wie im Fall mit zwei Rolleinrichtungen können auch hier die Anordnungswinkel der drei Rolleinrichtungen unterschiedlich sein.

Bevorzugt ist der Abstand der Rolleinrichtung zur weiteren Rolleinrichtung mit Hilfe mindestens einer Verschiebemechanik verstellbar. Ferner ist es bevorzugt, wenn der Abstand der zusätzlichen Rolleinrichtung zur Rolleinrichtung und/oder zur weiteren Rolleinrichtung mit Hilfe mindestens einer Verschiebemechanik verstellbar ist. Ferner ist es bevorzugt, wenn die räumliche Anordnung der Rolleinrichtung, der weiteren Rolleinrichtung und der zusätzlichen Rolleinrichtung zueinander mit Hilfe mindestens einer Verschiebemechanik verstellbar ist. Hierbei ist es ferner bevorzugt, dass die Rolleinrichtungen jeweils als Einheit gegenüber dem zu transportierenden Behälter ausrichtbar sind, d.h. dass jede Rolleinrichtung um eine parallel zur Transportrichtung verlaufende Achse rotierbar ist. Dies hat den Vorteil, dass die Rollelemente der Rolleinrichtungen ideal zur Oberfläche des zu transportierenden Behälters ausgerichtet werden können.

Bevorzugt ist nur eine Rolleinrichtung senkrecht zur Transportrichtung in Richtung des Behälters verschiebbar, während die beiden anderen Rolleinrichtungen nicht verschiebbar, jedoch verschwenkbar sind. Hierdurch wird eine Anpassung der geometrischen Anordnung der Rolleinrichtungen an unterschiedliche Behältergrößen bzw. unterschiedliche Durchmesser des Behälters ermöglicht.

Bevorzugt entsprechen die Ebene und die weitere Ebene einander. Dies bedeutet geometrisch, dass die Lagerachsen der Räder der Rolleinrichtung und der weiteren Rolleinrichtung in derselben Ebene liegen. Falls der Anordnungswinkel dieser beiden Rolleinrichtungen 90° beträgt, liegen die Räder der beiden Rolleinrichtungen in diesem Fall in zwei parallel zueinander verlaufenden Ebenen.

Bevorzugt sind die Rolleinrichtung, die weitere Rolleinrichtung und/oder die zusätzliche Rolleinrichtung jeweils um eine zur Transportrichtung parallelen Drehachse verschwenkbar. Hierdurch wird erreicht, dass die Laufflächen der Räder einer jeden Rolleinrichtung an die Oberfläche des Behälters angepasst werden können, wodurch eine bessere Kraftübertragung und somit eine höhere Transportgeschwindigkeit bzw. Rotationsgeschwindigkeit um die Längsachse erreicht wird.

Bevorzugt ist die Verschwenkbarkeit der Rolleinrichtungen jeweils mit Hilfe eines in einer Führungsnut geführten Führungsstifts realisiert. Hierbei verläuft sowohl der Führungsstifts als auch die Führungsnut entlang der Transportrichtung. Für den bevorzugten Fall, dass die Rolleinrichtung aus mehreren entlang der Transportrichtung angeordneten Rollelementen besteht, wobei jedes Rollelement mit dem jeweiligen Befestigungsmittel an einer entlang der Transportrichtung verlaufenden ebenen Leiste befestigt ist, kann eine entlang der Transportrichtung verlaufende Kante als Drehachse und eine dieser Kante gegenüberliegende Kante der Leiste einen Führungsstift aufweisen, welcher in einer Führungsnut geführt wird, wobei jeder Punkt der Führungsnut von dem entsprechenden, entlang der Transportrichtung auf derselben Höhe liegenden Punkt der Drehachse denselben Abstand aufweist. Bevorzugt weist die ebene Leiste an ihren beiden Enden entlang der Transportrichtung jeweils einen Führungsstift auf, welche jeweils in einer Führungsnut geführt ist. In diesem Fall kann durch Verschenken des Führungsstifts oder der Führungsstifte jede Rolleinrichtung um ihre jeweilige Drehachse verschwenkt werden. Bevorzugt geschieht dies mit einem elektrischen Antrieb.

Bevorzugt weisen mindestens zwei der Rolleinrichtungen dieselbe Anzahl an Rollelementen auf und steht jeweils einem Rollelement einer Rolleinrichtung jeweils ein anderes Rollelement einer anderen Rolleinrichtung entlang der Transportrichtung auf derselben Höhe gegenüber. Bevorzugt weisen drei Rolleinrichtungen dieselbe Anzahl an Rollelementen auf, welche jeweils entlang der Transportrichtung auf derselben Höhe angeordnet sind. Dieser den Vorteil, dass die von den Rollelementen auf den Behälter radial ausgeübten Kräfte entlang der Transportrichtung auf den Behälter gleichmäßig sind, so dass der Behälter nicht gegenüber der Transportrichtung verkantet wird und gleichmäßig in die Transportrichtung transportiert werden kann.

Bevorzugt sind die Rollelemente jeweils um eine Ausrichtungsachse rotierbar, wobei die jeweilige Ausrichtungsachse senkrecht zur jeweiligen Ebene ist, in der das jeweilige Rollelement angeordnet ist. Hierdurch wird erreicht, dass der Ausrichtungswinkel für jedes Rollelement durch Drehung um die jeweilige Ausrichtungsachse einfach einstellbar ist.

Bevorzugt ist das mindestens eine Rollelement oder das mindestens eine Rad der Rolleinrichtung, der weiteren Rolleinrichtung und/oder der zusätzlichen Rolleinrichtung jeweils durch einen Antrieb, insbesondere durch einen Drehantrieb, antreibbar. Hierdurch wird vorteilhafterweise erreicht, dass der Behälter durch die angetriebene Drehung des Rollelement entlang der Transportrichtung befördert wird oder um seine Längsachse rotiert wird, während die nicht angetriebenen Rollelementen zur Führung und zur Reduzierung der Reibung dienen.

Bevorzugt sind die Rollelemente der Rolleinrichtung, der weiteren Rolleinrichtung und/oder der zusätzlichen Rolleinrichtung mit Hilfe jeweils einer Drehvorrichtung um die jeweilige Ausrichtungsachse drehbar. Hierbei sind die Rollelemente bevorzugt um mindestens 90° drehbar. Hierbei wird bevorzugt ein Ausrichtungswinkel von 0° und 90° erreicht. Bevorzugt erfolgt die Drehung der Rollelemente in mehreren vorzugsweise gleichen Schritten oder stufenlos.

Bevorzugt ist die jeweilige Drehvorrichtung mit Hilfe jeweils eines Aktors antreibbar.

Bevorzugt ist mindestens ein Rollelement einer Rolleinrichtung mit Hilfe jeweils eines Aktors um die jeweilige Ausrichtungsachse drehbar. Hierbei gibt es bevorzugt einen der jeweiligen Rolleinrichtungen gemeinsamen Mechanismus, durch den die Drehung des durch den Aktor angetriebenen Rollelements auf die anderen Rollelemente der Rolleinrichtung übertragen wird.

Bevorzugt ist jedes Rollelement einer Rolleinrichtung mit Hilfe jeweils eines Aktors um die jeweilige Ausrichtungsachse drehbar.

Bevorzugt weist die mindestens eine Verschiebemechanik oder der mindestens eine Aktor jeweils einen Elektromotor, insbesondere einen Bürsten-Motor, einen bürstenlosen Gleichstrommotor (BLDC) oder einen Schrittmotor auf.

Bevorzugt erfolgt der Antrieb bzw. die Drehung mit Hilfe von Zahnriemen, Ketten und/oder Hubstangen. Nach einer Ausführungsform wird für die gemeinsame Drehung der Rollelemente einer Rolleinrichtung ein Zahnriemen an den Rollelementen so angebracht, dass eine Drehung des Zahnriemens eine entsprechende Drehung der Rollelemente bewirkt. Hierbei wird der Zahnriemen durch einen Aktor angetrieben.

Bevorzugt bildet die Transportrichtung mit der Horizontalen einen Winkel zwischen 0° und 90°. Hierdurch wird vorteilhafterweise erreicht, dass die Behälter auch vertikal befördert werden können, wodurch die üblicherweise bei Rücknahmeautomaten vorhandenen horizontalen Transportstrecken platzsparender angeordnet werden können.

Bevorzugt ist ein Teil der Oberfläche mindestens eines der Räder der Rollelemente, welcher bei bestimmungsgemäßen Gebrauch der Vorrichtung eine Oberfläche der Behälter berührt, so ausgebildet, dass die Kraftübertragung auf den Behälter erhöht ist. Hierdurch wird vorteilhafterweise erreicht, dass die Reibung zwischen der Oberfläche der Räder der Rollelemente und des zu transportierenden Behälters erhöht wird, wodurch insbesondere bei Transport in vertikaler Richtung ein Abrutschen des Behälters vermieden werden kann. Eine solche Erhöhung der Reibung, insbesondere der Haftreibung, kann durch eine Verstärkung der Oberfläche der Räder der Rollelemente erreicht werden. Hierbei werden bevorzugt gut haftende Materialien mit hoher Haftreibung als Material der Oberfläche der Räder verwendet. Alternativ oder zusätzlich kann ein Profil auf der Oberfläche der Räder der Rollelemente vorgesehen sein.

Bevorzugt wird eine vorstehend beschriebene Vorrichtung in einem Rücknahmeautomaten für Behälter benutzt.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Fig. 1: eine schematische Darstellung eines Rollelements;
- Fig. 2: eine schematische Darstellung einer Rolleinrichtung;
- Figur 3: eine schematische Darstellung einer mit einem Aktor angetriebenen Vorrichtung zum Drehen aller Rollelemente einer Rolleinrichtung;
- Figur 4 bis 6: eine schematische Darstellung für drei unterschiedliche Betriebsarten einer Vorrichtung zur Handhabung von Behältern mit zwei Rolleinrichtungen;
- Figur 7: eine schematische Darstellung einer im Vergleich zu den Figuren 4 bis 6 modifizierten Ausführungsform der Vorrichtung zur Handhabung von Behältern; und
- Figur 8: eine schematische Darstellung Vorrichtung zur Handhabung von Behältern mit drei Rolleinrichtungen.

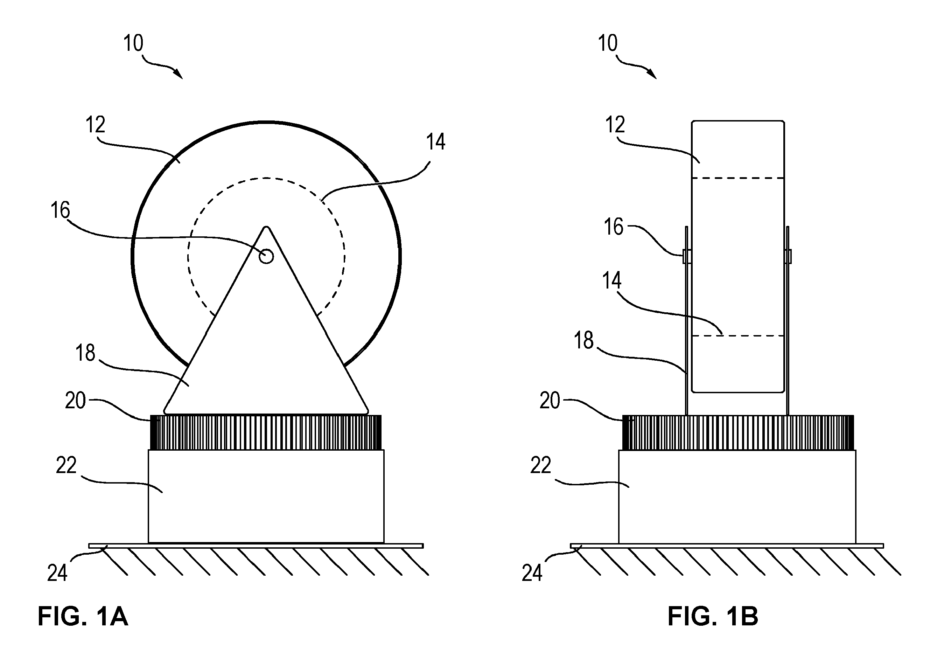

Figur 1 zeigt eine schematische Darstellung eines Rollelements 10. Vorliegend weist das Rollelement 10 ein Rad 12 mit einem durch gestrichelte Linien angedeuteten Drehantrieb 14 auf. Das Rad 12 weist eine Lagerachse 16 auf, deren Endpunkte mit den beiden Schenkeln eines Profils 18 verbunden sind. Die beiden Schenkel des Profils 18 sind fest mit einer Grund- bzw. Deckfläche eines zylinderförmigen Rollenteils 20 verbunden. Die Drehachse des Rollenteils 20 entspricht der Symmetrieachse des zylinderförmigen Grundkörpers des Rollenteils 20, ist senkrecht zur Lagerachse 16 des Rads 12 und schneidet diese. Das Rollenteil 20 ist auf seiner dem Profil 18 abgewandten Grundfläche mit einem Basisteil 22 drehbar verbunden. Das Basisteil 22 weist ebenso wie das Rollenteil 20 einen zylinderförmigen Grundkörper mit einem im Wesentlichen gleich Durchmesser auf, dessen Höhe größer als die Höhe des Rollenteils 20 ist. Die Grundfläche des Basisteils 22 ist auf einer ebenen Leiste 24 befestigt.

Der in der Figur 1 nicht dargestellte Drehantrieb 14 des Rollelements 10 kann durch einen auf einer Seite des Rades 12 angeordneten Elektromotor realisiert werden. Bevorzugt wird der Elektromotor auf der dem zu transportieren Behälter abgewandten Seite des Rades 12 angebracht.

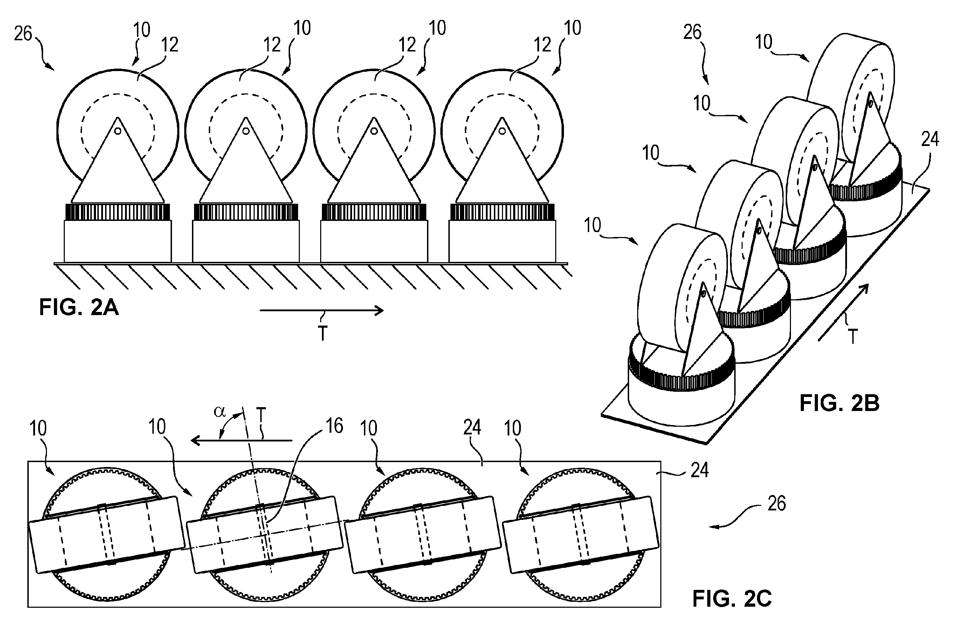

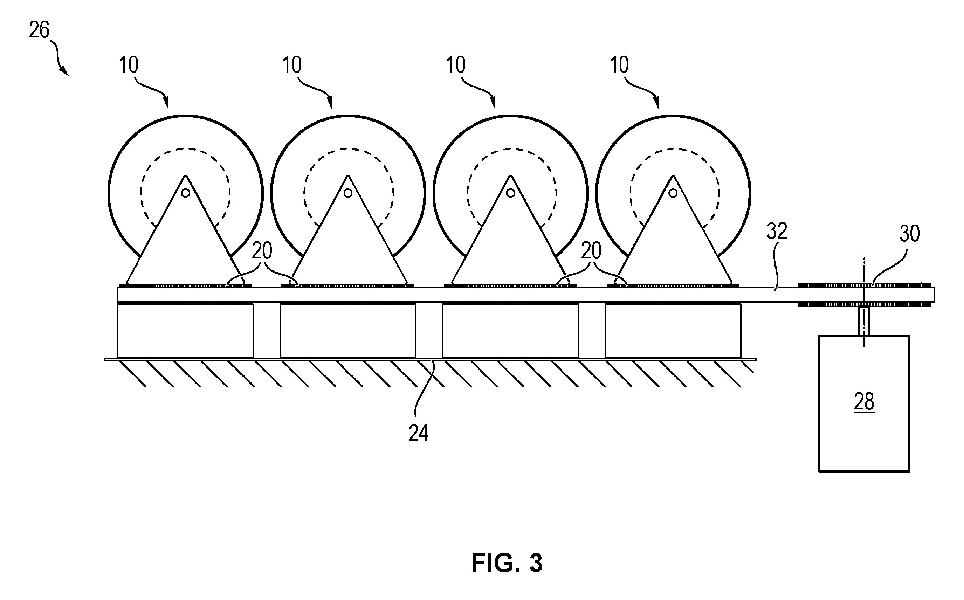

Fig. 2 zeigt eine schematische Darstellung einer Rolleinrichtung 26 mit mehreren baugleichen Rollelementen 10, die jeweils dem in der Figur 1 dargestellten Rollelement 10 entsprechen. Hierbei sind die Rollelemente 10 der Rolleinrichtungen 26 auf der ebenen Leiste 24 entlang einer geraden Linie, welche parallel zur Transportrichtung T verläuft, angebracht. Die Räder 12 und somit auch deren Lagerachsen 16 verlaufen jeweils parallel zueinander. Dies wird durch einen Mechanismus erreicht, welcher im Zusammenhang mit Figur 3 erläutert wird. Figur 2C verdeutlicht einen Ausrichtungswinkel α der Räder 12. Der Ausrichtungswinkel α eines jeden Rollelements 10 der von der jeweiligen Lagerachse 16 und der Transportrichtung T eingeschlossene Winkel, welcher kleiner oder gleich 90° ist.

Figur 3 zeigt eine schematische Darstellung eines mit einem Aktor 28 angetriebenen Mechanismus zum Drehen aller Rollelemente 10 einer Rolleinrichtung 26. Der Aktor 28 weist ein über eine Antriebswelle mit dem Aktor 28 verbundenes Antriebsrad 30 auf. Als Aktor 28 wird bevorzugt ein Elektromotor, insbesondere ein Bürsten-Motor, ein bürstenlosen Gleichstrommotor (englisch BLDC motor oder brushless DC motor) oder ein Schrittmotor verwendet. Sowohl das Antriebsrad 30 als auch die Rollenteile 20 der Rollelemente 10 weisen ebenso wie eine Riemenscheibe jeweils am äußeren Umfang umlaufende Keilnuten auf, in die Zähne eines um die Rollelemente 10 und das Antriebsrad 30 umlaufenden Zahnriemens 32 eingreifen, so dass durch Antrieb des Antriebsrades 30 durch den Aktor 28 der Zahnriemen 32 die Rollenteil 20 der Rollelemente 10 antreibt und in Rotation versetzt. Hierbei resultiert eine Drehung des Antriebsrades 30 um einen bestimmten Winkel in einer Drehung aller Rollelemente 10 um denselben Winkel. Bei den Figuren 1,2 sowie 4 bis 8 sind bei den dort abgebildeten Rollelementen 10 jeweils die entsprechenden Zahnriemen 32 und die dazugehörigen Aktoren 28 der Übersichtlichkeit halber weggelassen.

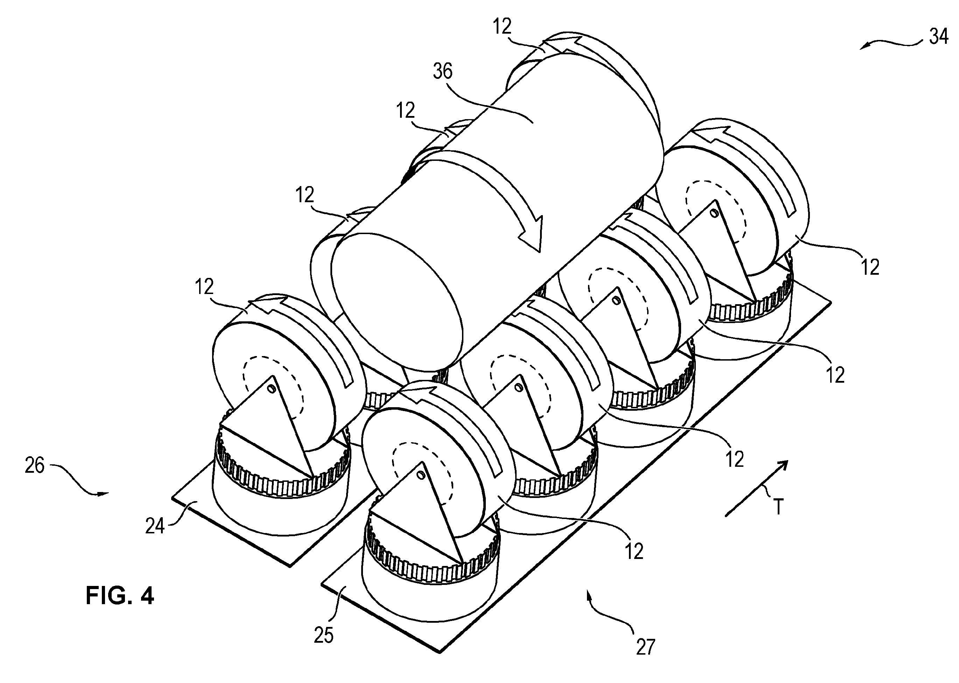

Die Figuren 4 bis 6 zeigen drei unterschiedliche Betriebsarten einer Vorrichtung 34 zur Handhabung von Behältern 36. Figur 4 zeigt Vorrichtung 34 zur Handhabung von Behältern 36, welche eine Rolleinrichtungen 26 und eine weitere Rolleinrichtung 27, welche mit der Rolleinrichtung 26 baugleich ist, aufweist. Die Rollelemente 10 der Rolleinrichtung 26 und der Rolleinrichtung 27 sind parallel zur Transportrichtung T angebracht. Die Rollelemente 12 der Rolleinrichtung 26 sind auf der ebenen Leiste 24 und die Rollelemente 12 der weiteren Rolleinrichtung 27 sind auf einer ebenen Leiste 25 montiert. Hierbei liegen die ebenen Leisten 24, 25 der Rolleinrichtung 26 und der weiteren Rolleinrichtung 27 in derselben Ebene. In der Darstellung der Figur 4 stehen alle Räder 12 der Rolleinrichtung 26 und der weiteren Rolleinrichtung 27 senkrecht zur Transportrichtung. Somit betragen die Ausrichtungswinkel der Räder 12 jeweils 0°. Ein Behälter 36 wird von den Rädern 12 der Rolleinrichtung 26 und den Rädern 12 der weiteren Rolleinrichtung 27 getragen bzw. gestützt. Hierbei berührt ein linker unterer als auch ein rechter unterer Teil der Oberfläche des Behälters 36 die Räder 12 der weiteren Rolleinrichtung 27 bzw. der Rolleinrichtung 26. Falls sich die Räder 12 der beiden Rolleinrichtungen 26, 27, wie in der Figur 4 dargestellt, entgegen dem Uhrzeigersinn drehen, falls man entlang der Transportrichtung T blickt, so bewirken die Laufflächen der Räder 12 eine tangential auf die Oberfläche des Behälters 36 wirkende Kraft, so dass dieser sich im Uhrzeigersinn dreht.

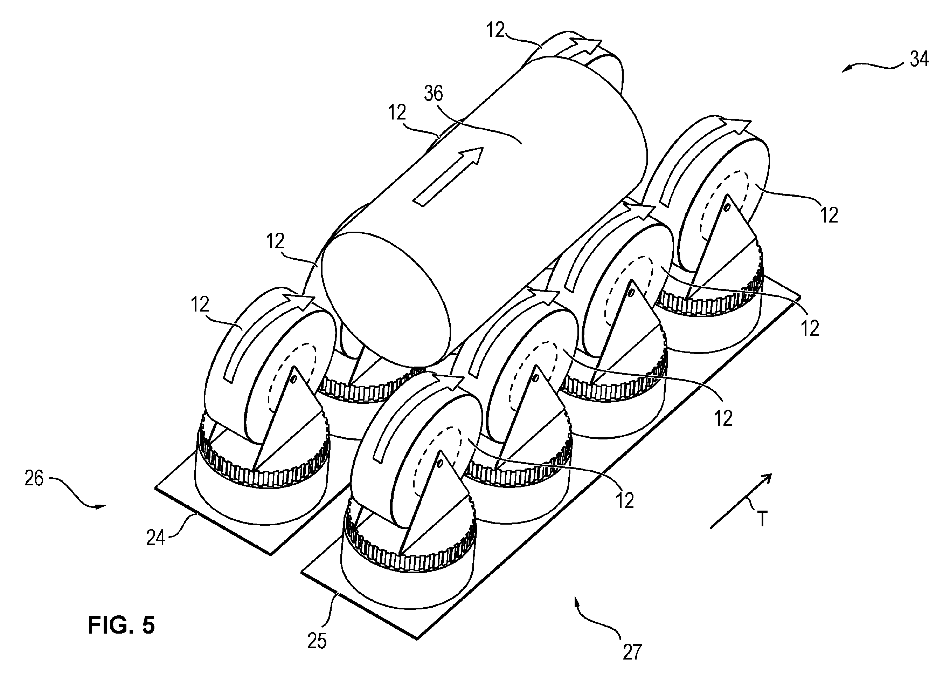

Figur 5 zeigt dieselbe Vorrichtung 34 wie die Figur 4, wobei die Ausrichtungswinkel der Räder 12 der Rolleinrichtungen 26, 27 jeweils 90° betragen. Falls die Räder 12 so angetrieben werden, dass sich deren zum Behälter 36 weisende Laufflächen 12 entlang der Transportrichtung T bewegen, so wird der Behälter 36 entlang der Transportrichtung T befördert.

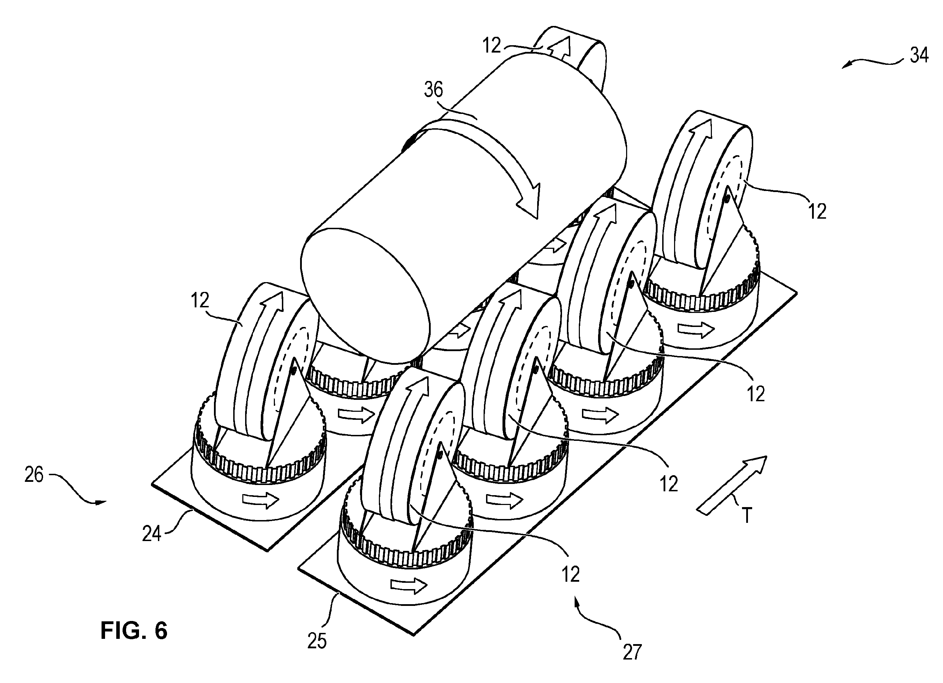

Figur 6 zeigt dieselbe Vorrichtung 34 wie die Figuren 4 oder 5, wobei der Ausrichtungswinkel der Räder 12 zwischen 0° und 90° liegt. Vorliegend ist der Ausrichtungswinkel etwas kleiner als 90°, wobei in der Ansicht der Figur 6 die Räder 12 im Vergleich zur Transportrichtung T leicht nach links gedreht sind, so dass sich der Behälter 36 bei einer Bewegung in die Transportrichtung T im Uhrzeigersinn dreht, wenn man den Behälter 36 in die Transportrichtung T betrachtet. Durch Einstellung des Ausrichtungswinkels zwischen 0° und 90° kann die Bewegung des Behälters zwischen einem reinen Transport in Transportrichtung und einer reinen Drehung um die Längsachse kontinuierlich variiert werden.

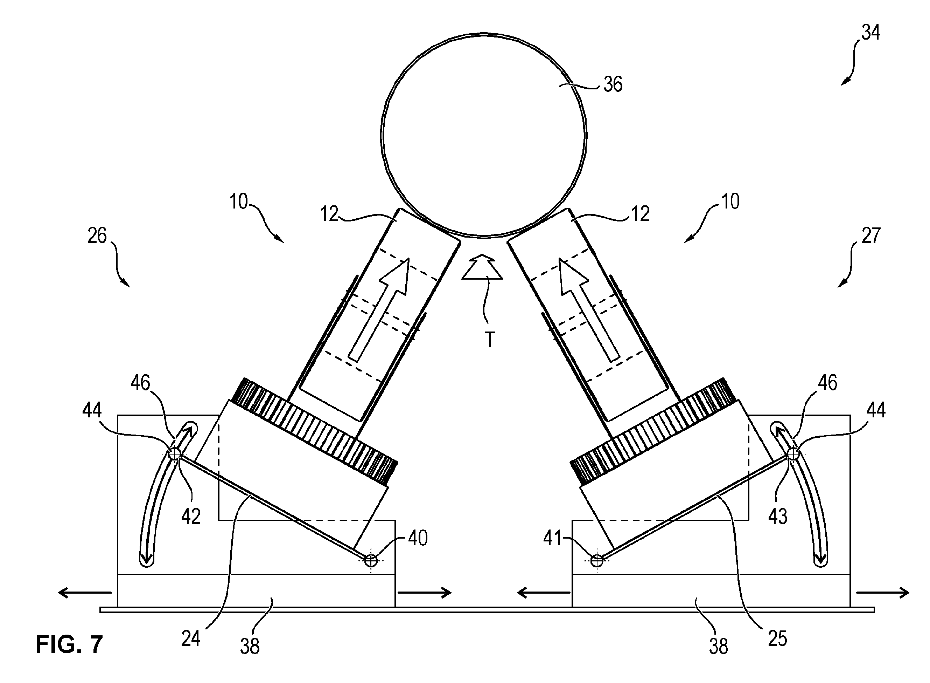

Figur 7 zeigt eine schematische Darstellung einer im Vergleich zu den Figuren 4 bis 6 modifizierten Ausführungsform der Vorrichtung 34 zur Handhabung von Behältern 36. Die Modifikation besteht darin, dass die Rolleinrichtung 26 und die weitere Rolleinrichtung 27 jeweils um eine parallel zur Transportrichtung verlaufende Achse schwenkbar sind, so dass die jeweiligen Laufflächen der Räder 12 einen besseren Kontakt zum zu transportierenden Behälter 36 haben. Ferner sind zwei Verschiebemechaniken 38 vorgesehen, welche den Abstand, insbesondere in horizontaler Richtung, der Rolleinrichtung 26 zur weiteren Rolleinrichtung 27 verändern können.

Die ebene Leiste 24 der Rolleinrichtung 26 weist eine zur weiteren Rolleinrichtung 27 weisende Innenkante 40 und eine der Innenkante 40 gegenüberliegende Außenkante 42 auf. Dementsprechend weist die weitere Rolleinrichtung 27 eine zur Rolleinrichtung 26 weisende Innenkante 41 und eine der Innenkante 41 gegenüberliegende Außenkante 43 auf. Hierbei sind die Innenkanten 40, 41 um sich selbst drehbar gelagert. Die Außenkanten 42, 43 weisen an ihren beiden Enden entlang der Transportrichtung T jeweils einen Führungsstift 44 auf, welcher jeweils von der ebenen Leiste 24, 25 hervorragt. Die Führungsstifte 44 sind jeweils in Führungsnuten 46 geführt, so dass die Rolleinrichtung 26 und die weitere Rolleinrichtung 27 jeweils mit Hilfe von zwei Führungskräften 44 und zwei Führungsnuten 46 jeweils um die Innenkanten 40, 41 verschwenkbar sind. Die Rolleinrichtung 26 und die weitere Rolleinrichtung 27 weisen jeweils mit ihnen verbundene Verschiebemechaniken 38 auf, die die Rolleinrichtungen 26, 27 horizontal verschieben können. Hierdurch kann der horizontale Abstand der Rolleinrichtung 26 zur weiteren Rolleinrichtung 27 verändert werden. Durch Verschwenken der Rolleinrichtung 26 und der weiteren Rolleinrichtung 27 sowie der Veränderung des horizontalen Abstands der Rolleinrichtung 26 zur weiteren Rolleinrichtung 27 mit Hilfe der Verschiebemechaniken 38 können die Laufflächen der Räder 12 der Rolleinrichtung 26 und der weiteren Rolleinrichtung 27 exakt an die Oberfläche des Behälters 36 angepasst werden, so dass eine optimale Kraftübertragung von den angetriebenen Rädern 12 auf den Behälter 36 erfolgt.

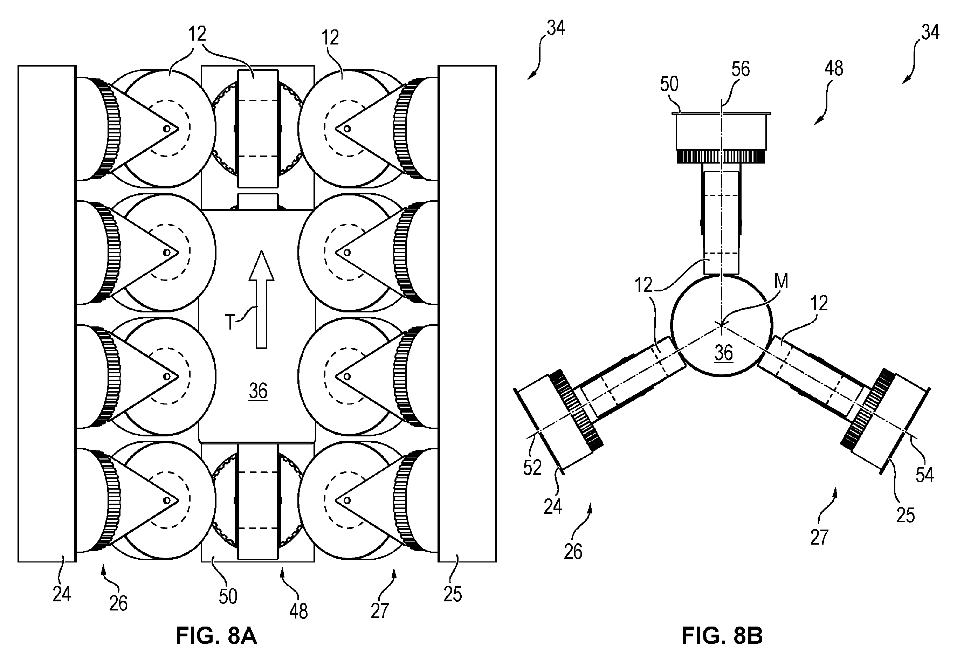

Figur 8 zeigt eine schematische Darstellung der Vorrichtung 34 zur Handhabung von Behältern 36 mit drei Rolleinrichtungen. Hierbei werden die 3 Rolleinrichtungen so angeordnet, dass ein Behälter 36 zwischen den jeweiligen Rädern 12 der Rolleinrichtungen 26, 27, 48 eingeklemmt ist, wodurch dieser auch in eine horizontale Richtung transportierbar ist. Jedes Rad 12 der Rolleinrichtung 26 weist eine Ausrichtungsachse 52 auf, welche senkrecht zur jeweiligen Lagerachse 16 des jeweiligen Rades 12 und durch die Symmetrieachse des jeweiligen Rollenteils 20 oder Basisteils 22 verläuft. Die weitere Rolleinrichtung 27 und die zusätzliche Rolleinrichtungen 48 weisen entsprechende Ausrichtungsachsen 54 bzw. 56 auf. Idealerweise sind die Ausrichtungsachsen 52, 54, 56 von drei Rädern 12, welche jeweils in unterschiedlichen Rolleinrichtungen 26, 27, 48 angeordnet sind und welche sich entlang der Transportrichtung T auf derselben Höhe befinden, bezüglich des Behälters 36 so ausgerichtet, dass sich ihre Achsen in einem Punkt M auf einer Symmetrieachse des Behälters 36 schneiden. Für den Fall, dass die Vorrichtung 34 unterschiedliche Behälter 36 mit unterschiedlichen Durchmessern entgegennimmt, ist vorgesehen, dass die räumliche Anordnung der Rolleinrichtungen 26, 27, 48 so veränderbar ist, dass Behälter mit unterschiedlichen Durchmessern transportiert werden können. Nach einer Ausführungsform ist vorgesehen, dass die Rolleinrichtung 26 und die weitere Rolleinrichtung 27 um jeweils eine zur Transportrichtung parallele Richtung verschwenkbar sind und die zusätzliche Rolleinrichtung 48 entlang einer Höhenrichtung H verschiebbar ist.

Falls die Rolleinrichtungen 26, 27, 48 sowie in Figur 8 abgebildet angeordnet sind, wird ein eingegebener Behälter 36 zwischen den jeweiligen Rädern 12 der Rolleinrichtungen 26, 27, 48 eingeklemmt, so dass der Behälter 36 nicht nur entlang der Horizontalen sondern auch entlang einer vertikalen Richtung transportiert werden kann.

### Bezugszeichenliste

- 10: Rollelement
- 12: Rad
- 14: Drehantrieb
- 16: Lagerachse
- 18: Profil
- 20: Rollenteil
- 22: Basisteil
- 24: Leiste
- 25: weitere Leiste
- 26: Rolleinrichtung
- 27: weitere Rolleinrichtung
- 28: Aktor
- 30: Antriebsrad
- 32: Zahnriemen
- 34: Vorrichtung zur Handhabung von Behältern
- 36: Behälter
- 38: Verschiebemechanik
- 40, 41: Innenkante
- 42, 43: Außenkante
- 44: Führungsstift
- 46: Führungsnut
- 48: zusätzliche Rolleinrichtung
- 50: ebene Leiste
- 52, 54, 56: Ausrichtungsachsen
- α: Ausrichtungswinkel

## Patentansprüche

1. Vorrichtung (34) zur Handhabung von Behältern (36) mit einer Fördervorrichtung zum Transport eines Behälters (36) in eine Transportrichtung (T) mit
einer Rolleinrichtung (26), welche mindestens ein entlang der Transportrichtung (T) angeordnetes Rollelement (10) aufweist,
wobei die Transportrichtung (T) parallel zu einer Längsachse des Behälters (36) verläuft, und
wobei das mindestens eine Rollelement (10) so ausgeführt ist,
dass es in einer Förderanordnung zum Transportieren des Behälters (36) in die Transportrichtung (T) aufgrund einer Drehung um eine eigene Achse auf den Behälter (36) eine in die Transportrichtung (T) wirkende Kraft ausübt, so dass der Behälter (36) in die Transportrichtung (T) befördert wird, und
dass es in einer Identifizierungsanordnung zum Identifizieren des Behälters (36) durch Rotation des Behälters (36) um die Längsachse aufgrund einer Drehung um die eigene Achse oder um eine weitere eigene Achse auf den Behälter (36) eine tangential an einer Oberfläche des Behälters (36) wirkende Kraft ausübt, so dass der Behälter (36) um die Längsachse rotiert wird.

2. Vorrichtung (34) nach Anspruch 1, **dadurch gekennzeichnet, dass** das mindestens eine Rollelement (10) in einer Kombinationsanordnung aufgrund einer Drehung um die eigene Achse oder um eine zusätzliche eigene Achse auf den Behälter (36) eine sowohl tangential an der Oberfläche des Behälters (36) wirkende als auch in die Transportrichtung (T) wirkende Kraft ausübt, so dass der Behälter (36) in die Transportrichtung (T) befördert wird und gleichzeitig um die Längsachse rotiert wird.

3. Vorrichtung (34) nach Anspruch 1 oder 2, **dadurch gekennzeichnet, dass** das mindestens eine Rollelement (10) ein um eine Lagerachse (16) drehbares Rad (12) aufweist.

4. Vorrichtung (34) nach Anspruch 3, wobei die Rolleinrichtung (26) eine Mehrzahl von in einer Ebene (24) und entlang der Transportrichtung (T) angeordneten Rollelementen (10) aufweist,
wobei die Lagerachsen (16) der Räder (12) parallel zu der Ebene (24) sind,
wobei die Lagerachsen (16) der Räder (12) der Rolleinrichtung (26) parallel zueinander sind und in einer einzigen Ebene verlaufen,
wobei die Lagerachsen (16) der Räder (12) der Rolleinrichtung (26) in der Ebene (24) mit der Transportrichtung (T) einen Ausrichtungswinkel (α) bilden, wobei der Ausrichtungswinkel (α) derjenige Winkel ist, welcher kleiner als oder gleich 90° ist,
wobei der Fall, in dem der Ausrichtungswinkel (α) 90° beträgt, der Förderanordnung, der Fall, in dem der Ausrichtungswinkel (α) 0° beträgt, der Identifizierungsanordnung entspricht, und der Fall, in dem der Ausrichtungswinkel (α) zwischen 0° und 90° liegt, der Kombinationsanordnung entspricht, und
wobei die Rolleinrichtung (26) so angeordnet ist, dass mindestens eines der Räder (12) der Rolleinrichtung (26) in der Förderanordnung aufgrund einer Drehung mindestens eines der Räder (12) der Rolleinrichtung (26) auf den Behälter (36) eine in die Transportrichtung (T) wirkende Kraft ausübt, so dass der Behälter (36) in die Transportrichtung (T) befördert wird, in der Identifizierungsanordnung aufgrund einer Drehung mindestens eines der Räder (12) der Rolleinrichtung (26) auf den Behälter (36) eine tangential an einer Oberfläche des Behälters (36) wirkende Kraft ausübt, so dass der Behälter (36) um die Längsachse rotiert wird, und in der Kombinationsanordnung aufgrund einer Drehung mindestens eines der Räder (12) der Rolleinrichtung (26) auf den Behälter (36) eine sowohl tangential an der Oberfläche des Behälters (36) wirkende als auch in die Transportrichtung (T) wirkende Kraft ausübt, so dass der Behälter (36) in die Transportrichtung (T) befördert wird und gleichzeitig um die Längsachse rotiert wird.

5. Vorrichtung (34) nach einem der Ansprüche 3 bis 4, **dadurch gekennzeichnet, dass** eine weitere Rolleinrichtung (27) vorgesehen ist, welche eine Mehrzahl von in einer weiteren Ebene (25) und entlang der Transportrichtung (T) angeordneten Rollelementen (10) aufweist, wobei die Lagerachsen (16) der Räder (12) der weiteren Rolleinrichtung (27) parallel zu der weiteren Ebene (25) sind,
wobei die Lagerachsen (16) der Räder (12) der weiteren Rolleinrichtung (27) parallel zueinander sind und in einer einzigen Ebene verlaufen,
wobei die Lagerachsen (16) der Räder (12) der weiteren Rolleinrichtung (27) in der weiteren Ebene (25) mit der Transportrichtung (T) einen weiteren Ausrichtungswinkel (α) bilden, wobei der weitere Ausrichtungswinkel (α) derjenige Winkel ist, welcher kleiner als oder gleich 90° ist,
wobei der Fall, in dem der weitere Ausrichtungswinkel (α) 90° beträgt, der Förderanordnung, der Fall, in dem der Ausrichtungswinkel (α) 0° beträgt, der Identifizierungsanordnung entspricht, und der Fall, in dem der Ausrichtungswinkel (α) zwischen 0° und 90° liegt, der Kombinationsanordnung entspricht, und
wobei der Ausrichtungswinkel (α) und der weitere Ausrichtungswinkel (α) gleich sind, und
wobei die Ebene (24) der Rolleinrichtung (26) und die weitere Ebene (25) der weiteren Rolleinrichtung (27) so zueinander angeordnet sind und ein Abstand der Rolleinrichtung (26) zur weiteren Rolleinrichtung (27) so gewählt ist, dass mindestens eines der Räder (12) der Rolleinrichtung (26) und/oder der weiteren Rolleinrichtung (27) in der Förderanordnung aufgrund einer Drehung mindestens eines der Räder (12) der Rolleinrichtung (26) und/oder der weiteren Rolleinrichtung (27) auf den Behälter (36) eine in die Transportrichtung (T) wirkende Kraft ausübt, so dass der Behälter (36) in die Transportrichtung (T) befördert wird, in der Identifizierungsanordnung aufgrund einer Drehung mindestens eines der Räder (12) der Rolleinrichtung (26) und/oder der weiteren Rolleinrichtung (27) auf den Behälter (36) eine tangential an einer Oberfläche des Behälters (36) wirkende Kraft ausübt, so dass der Behälter (36) um die Längsachse rotiert wird, und in der Kombinationsanordnung aufgrund einer Drehung mindestens eines der Räder (12) der Rolleinrichtung (26) und/oder der weiteren Rolleinrichtung (27) auf den Behälter (36) eine sowohl tangential an der Oberfläche des Behälters (36) wirkende als auch in die Transportrichtung (T) wirkende Kraft ausübt, so dass der Behälter (36) in die Transportrichtung (T) befördert wird und gleichzeitig um die Längsachse rotiert wird.

6. Vorrichtung (34) nach Anspruch 5, **dadurch gekennzeichnet, dass** eine zusätzliche Rolleinrichtung (48) vorgesehen ist, welche eine Mehrzahl von in einer zusätzlichen Ebene (50) und entlang der Transportrichtung (T) angeordneten Rollelementen (10) aufweist,
wobei die Lagerachsen (16) der Räder (12) der zusätzlichen Rolleinrichtung (48) parallel zu der zusätzlichen Ebene (50) sind,
wobei die Lagerachsen (16) der Räder (12) der zusätzlichen Rolleinrichtung (48) parallel zueinander sind und in einer einzigen Ebene verlaufen,
wobei die Lagerachsen (16) der Räder (12) der zusätzlichen Rolleinrichtung (48) in der zusätzlichen Ebene (50) mit der Transportrichtung (T) einen zusätzlichen Ausrichtungswinkel (α) bilden, wobei der zusätzliche Ausrichtungswinkel (α) derjenige Winkel ist, welcher kleiner als oder gleich 90° ist,
wobei der Fall, in dem der Ausrichtungswinkel (α) 90° beträgt, der Förderanordnung, der Fall, in dem der Ausrichtungswinkel (α) 0° beträgt, der Identifizierungsanordnung entspricht, und der Fall, in dem der Ausrichtungswinkel (α) zwischen 0° und 90° liegt, der Kombinationsanordnung entspricht, und
wobei der Ausrichtungswinkel (α), der weitere Ausrichtungswinkel (α) und der zusätzliche Ausrichtungswinkel (α) gleich sind, und
wobei die Ebene (24), die weitere Ebene (25) und die zusätzliche Ebene (50) so zueinander angeordnet sind und die Rolleinrichtung (26), die weitere Rolleinrichtung (27) und die zusätzliche Rolleinrichtung (48) räumlich so angeordnet sind, dass mindestens eines der Räder (12) der Rolleinrichtung (26), der weiteren Rolleinrichtung (27) und/oder der zusätzlichen Rolleinrichtung (48) in der Förderanordnung aufgrund einer Drehung mindestens eines der Räder (12) der Rolleinrichtung (26), der weiteren Rolleinrichtung (27) und/oder der zusätzlichen Rolleinrichtung (48) auf den Behälter (36) eine in die Transportrichtung (T) wirkende Kraft ausübt, so dass der Behälter (36) in die Transportrichtung (T) befördert wird, in der Identifizierungsanordnung aufgrund einer Drehung mindestens eines der Räder (12) der Rolleinrichtung (26), der weiteren Rolleinrichtung (27) und/oder der zusätzlichen Rolleinrichtung (48) auf den Behälter (36) eine tangential an einer Oberfläche des Behälters (36) wirkende Kraft ausübt, so dass der Behälter (36) um die Längsachse rotiert wird, und in der Kombinationsanordnung aufgrund einer Drehung mindestens eines der Räder (12) der Rolleinrichtung (26), der weiteren Rolleinrichtung (27) und/oder der zusätzlichen Rolleinrichtung (48) auf den Behälter (36) eine sowohl tangential an der Oberfläche des Behälters (36) wirkende als auch in die Transportrichtung (T) wirkende Kraft ausübt, so dass der Behälter (36) in die Transportrichtung (T) befördert wird und gleichzeitig um die Längsachse rotiert wird.

7. Vorrichtung (34) nach einem der Ansprüche 4 bis 6,
**dadurch gekennzeichnet, dass** der Abstand der Rolleinrichtung (26) zur weiteren Rolleinrichtung (27) und/oder der Abstand der zusätzlichen Rolleinrichtung (48) zur Rolleinrichtung (26) und/oder zur weiteren Rolleinrichtung (27) mit Hilfe mindestens einer Verschiebemechanik (38) verstellbar ist.

8. Vorrichtung (34) nach einem der Ansprüche 5 bis 7,
**dadurch gekennzeichnet, dass** die Rolleinrichtung (26), die weitere Rolleinrichtung (27) und/oder die zusätzliche Rolleinrichtung (48) jeweils um eine zur Transportrichtung (T) parallelen Drehachse verschwenkbar sind.

9. Vorrichtung (34) nach einem der vorangehenden Ansprüche, **dadurch gekennzeichnet, dass** mindestens zwei der Rolleinrichtungen (26) dieselbe Anzahl an Rollelementen (10) aufweisen und jeweils einem Rollelement (10) einer Rolleinrichtung (26) jeweils ein anderes Rollelement (10) einer anderen Rolleinrichtung (26) entlang der Transportrichtung (T) auf derselben Höhe gegenübersteht.

10. Vorrichtung (34) nach einem der vorangehenden Ansprüche, **dadurch gekennzeichnet, dass** die Rollelemente (10) jeweils um eine Ausrichtungsachse (52, 54, 56) rotierbar sind, wobei die jeweilige Ausrichtungsachse (52, 54, 56) senkrecht zur jeweiligen Ebene (24, 25, 50) ist, in der das jeweilige Rollelement (10) angeordnet ist.

11. Vorrichtung (34) nach einem der vorangehenden Ansprüche, **dadurch gekennzeichnet, dass** das mindestens eine Rollelement (10) oder das mindestens eine Rad (12) der Rolleinrichtung (26), der weiteren Rolleinrichtung (27) und/oder der zusätzlichen Rolleinrichtung (48) jeweils durch einen Antrieb, insbesondere durch einen Drehantrieb (14), antreibbar ist.

12. Vorrichtung (34) nach einem der vorangehenden Ansprüche, **dadurch gekennzeichnet, dass** die Rollelemente (10) der Rolleinrichtung (26), der weiteren Rolleinrichtung (27) und/oder der zusätzlichen Rolleinrichtung (48) mit Hilfe jeweils einer Drehvorrichtung um die jeweilige Ausrichtungsachse (52, 54, 56) drehbar sind.

13. Vorrichtung (34) nach einem der vorangehenden Ansprüche, **dadurch gekennzeichnet, dass** die Transportrichtung (T) mit der Horizontalen einen Winkel zwischen 0° und 90° bildet.

14. Vorrichtung (34) nach einem der vorangehenden Ansprüche, **dadurch gekennzeichnet, dass** ein Teil der Oberfläche mindestens eines der Räder (12) der Rollelemente (10), welcher bei bestimmungsgemäßen Gebrauch der Vorrichtung (34) eine Oberfläche der Behälter (36) berührt, so ausgebildet ist, dass die Kraftübertragung auf den Behälter (36) erhöht ist.

15. Verwendung einer Vorrichtung (34) nach einem der Ansprüche 1 bis 14 in einem Rücknahmeautomaten für Behälter (36).
